(19) Europäisches Patentamt

European Patent Office

Office européen des brevets

(11) EP 1 278 052 A2

(12) **EUROPEAN PATENT APPLICATION**

(43) Date of publication:
**22.01.2003 Bulletin 2003/04**

(51) Int Cl.⁷: **G01L 1/22**, G01L 5/16

(21) Application number: **02254656.8**

(22) Date of filing: **03.07.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **21.07.2001 GB 0117867**

(71) Applicant: **Meritor Light Vehicle Systems-France
45600 Sully sur Loire (FR)**

(72) Inventor: **Dobson, Simon
Sandgate, Kent CT20 3TA (GB)**

(74) Representative: **Jones, John Bryn et al
Withers & Rogers,
Goldings House,
2 Hays Lane
London SE1 2HW (GB)**

(54) **Load determining device**

(57) A device (30) for determining a load applied to an object (18), the device comprising a printed circuit board and a gauge capable (38a) of providing an output from which the load may be derived or inferred, the gauge being formed integrally as part of the printed circuit.

FIG.6

## Description

The present invention relates to a device for determining loads. In particular, the present invention relates to a device for determining torque loads applied to a component such as a vehicle component.

Vehicles are known whereby doors of such vehicles include windows which can be power opened and power closed. When a window is being power closed, it is possible for parts of people, and in particular children, to get trapped in between the window and window surround. In order for such windows to function within legal and other requirements, it is necessary to avoid applying more than a certain, predetermined maximum force to an arm, finger or other part of the body when that part of the body interferes with the normal closure of the window. Equally, it is necessary to ensure that a sufficient force is available to fully close the window into its seals. To this end, the relevant specifications allow for the limited force to be exceeded once the opening is smaller than would admit entry of any part of the body.

Thus in known contact type anti-trap (anti-squeeze) systems a switch, typically within the door seal, is closed when a body part is trapped, and this triggers a decision within a control unit to stop or reverse the closing motion, and thereby release the body part.

Other known contact type anti-squeeze systems rely on an inference of trap force from a parameter measurable at the motor such as change in motor speeds, change in motor current or change in output torque, all of which are related to the forces applied to the closure i.e. the output force of the actuator assembly.

The aforesaid systems generally quite complex and require a high part count, which inevitably increases the unit cost of manufacturing and installing such systems.

One object of the present invention is to provide a lower cost anti-trap system requiring fewer components and a simpler assembly process.

Furthermore, due to rough roads or other terrain over which the vehicle may be travelling, triaxial accelerations with a significant vertical component are imposed on the vehicle. These vertical accelerations are applied to the window glass as to any other part of the vehicle and are reacted through the window regulator as variations in closure force. Under some circumstances these variations may produce forces on the window glass which resemble the forces produced when body parts are trapped. Under such circumstances the control unit will incorrectly reopen the window when this is unnecessary. Alternatively when a body part is being trapped, accelerations on the window glass due to rough terrain may reduce the apparent trapping force to below the predetermined level whereupon closure will continue and further trap a body part.

Thus situations arise which are inconvenient and/or distracting and are potentially dangerous for the occupants of the vehicle.

A further object of the present invention is to provide an improved form of closure system.

Accordingly, one aspect of the invention provides a device for determining a load applied to a object, the device comprising a printed circuit board and a gauge capable of providing an output from which the load may be derived or inferred, the gauge being formed integrally as part of the printed circuit.

A second aspect of the present invention provides a closure system including a closure moveable for substantially closing an aperture in use, and an actuator for at least closing the closure, the actuator being mounted by mounting means, the mounting means including one or more gauges for measuring, in use, parameters of the closure system, in use the closure system being subjected to accelerations and being arranged such that it is possible to at least partially distinguish forces applied to the closure by the actuator from acceleration forces applied to the closure as a result of the accelerations of the closure system by consideration of the measured parameters.

The invention will now be described by way of example only, with reference to the accompanying drawings in which:

FIGURE 1A is a schematic side view of a vehicle including a closure system incorporating a device according to the present invention;

FIGURE 1B is a cutaway view of a door illustrating an alternative closure system incorporating a device according to the present invention.

FIGURE 2 is a side view of a window motor and gear box forming part of the closure system of Figure 1;

FIGURE 3 is a side view of the device according to the present invention;

FIGURE 4 is an end view of the window motor, gear box and device in use;

FIGURES 5 and 6 are further views of Figure 2.

FIGURES 7 is a schematic block diagram of the device.

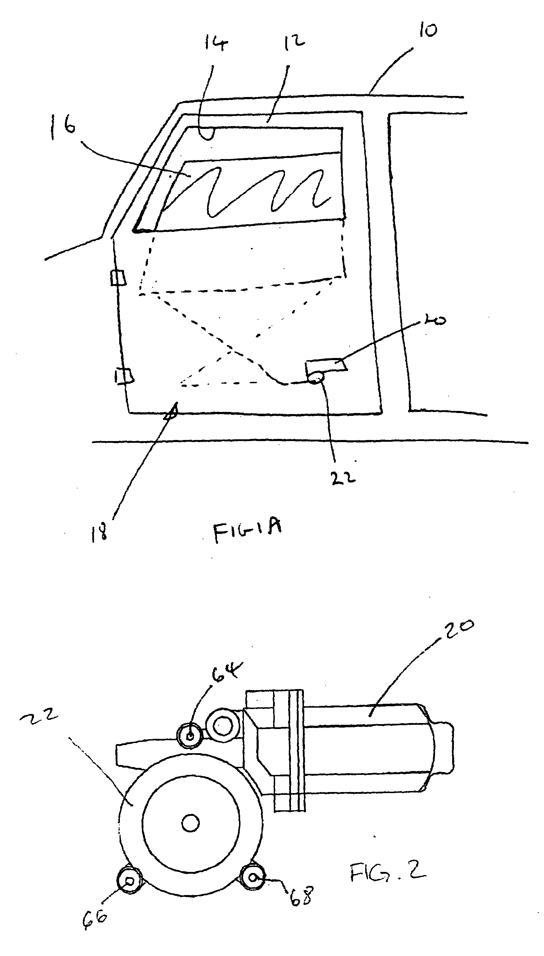

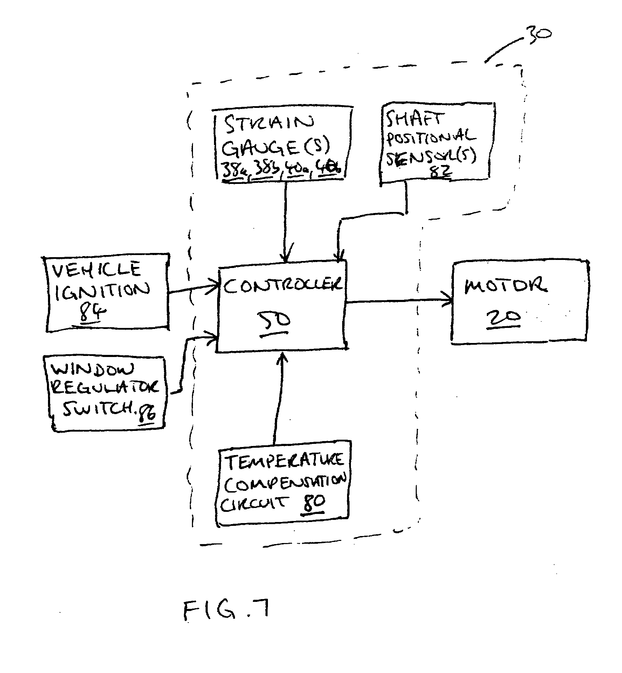

With reference to Figure 1A where is shown a vehicle 10 having a door 12 with a window aperture 14. An aperture closure in the form of a window glass 16 is moveable vertically to open and close the window aperture 14. A window regulator shown generally as 18 includes a window motor 20 and a gearbox 22.

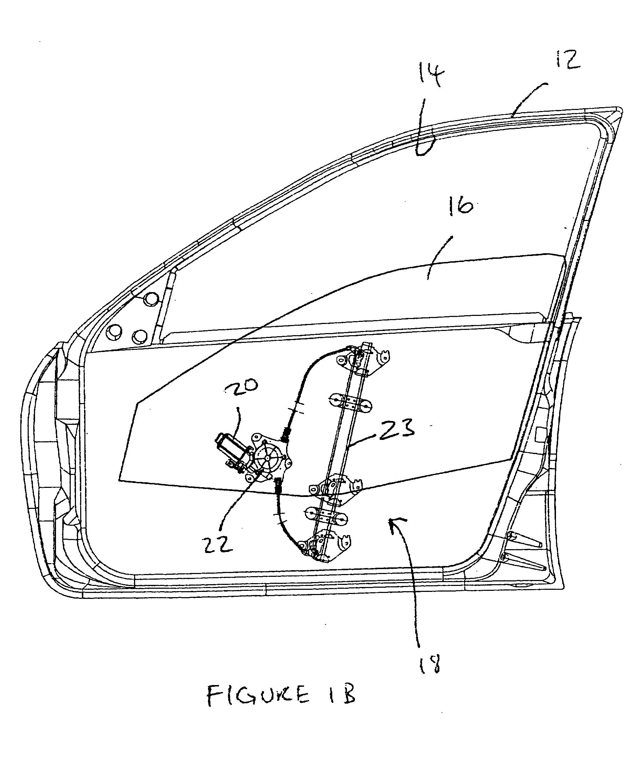

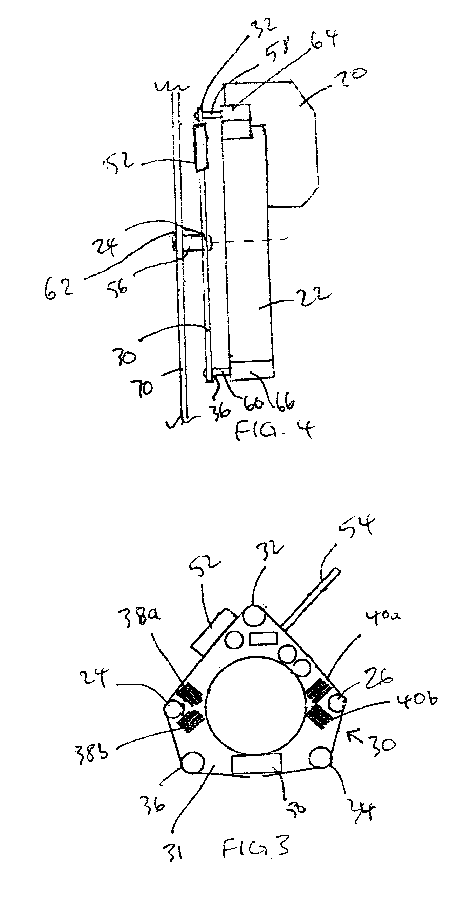

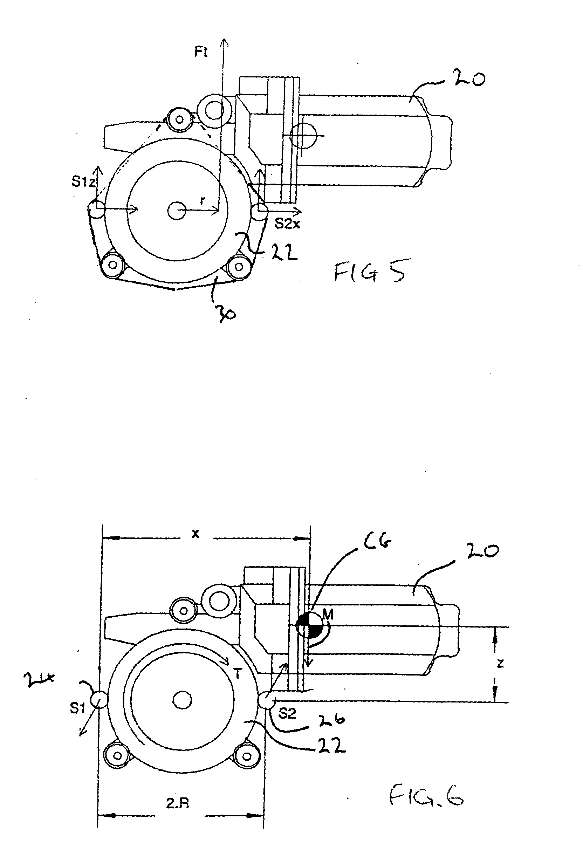

Figure 1B illustrates a motor 20 and gearbox 22 fitted to a regulator having a single lift track 23.

Referring now to Figures 2, 3, 4 and 7, the motor 20 and gearbox 22 are mounted to a fixed door panel 70, such as a door module (or carrier plate), via mounting means of which this embodiment comprises a printed circuit board (PCB) device 30 mounted intermediate the gearbox 22 and the panel 70 so that any loads induced between the gearbox 22 and the panel 70 are transmitted through the PCB device 30.

In this embodiment, of the gearbox 22 is mounted on the PCB device 30 by way of three pins 58, 60 and 62 (not shown) being secured through apertures 64, 66 and 68 of gearbox 22 and apertures 32, 34 and 36 of the PCB device 30. The device 30 is mounted on the panel 70 by two pins 56 interconnecting apertures 24 and 26 on the device with corresponding apertures on the panel (only aperture 62 being visible in the Figures).

It can be seen from Figure 3, in this embodiment the PCB device 30 has a pentagonal shape with a large central circular hole provided therein. The hole enables an output shaft (not shown) from the gearbox to pass through the PCB device 30 to drive the remainder of the window regulator system 18. In this embodiment, pairs of adjacent strain gauges are provided proximate mounting apertures 24 and 26, although in other embodiments strain gauges may be provided in alternative locations, such as adjacent one or more of apertures 32, 34, and 36. However, it will be apparent that the invention in its simplest form requires only a single strain gauge.

The strain gauges are preferably disposed on the PCB device 30 so as to maximise their response to the forces induced in the plane of the device 30 itself. The central hole in the device assists in achieving this, as does providing the apertures 24, 26, 32, 34, 36 and strain gauges proximate the periphery of the PCB device 30. In this embodiment, strain gauges 38a and 40a are positioned perpendicular to adjacent strain gauges 38b and 40b, thus enabling the forces to be resolved in any direction. In addition, the provision of at least two strain gauges means that differing ratios of strain may be applied to, and be measured by, each gauge. In turn, an arrangement of two or more strain gauges enables torque loads applied by the motor to be at least partially distinguished from extraneous forces to which the PCB device is subjected, for example. This aspect of the invention is discussed in greater detail below.

The strain gauges 38a, 38b, 40a and 40b are printed on to substrate 31 of the PCB device 30 using a known PCB manufacturing technique such as photo deposition or photo etching. Hitherto, in similar applications discrete strain gauges have required gluing onto the member being strained plus subsequent electrical connections to be carried out by hand or on high capital cost automated equipment. Therefore, the aforesaid technique represents a significant cost saving. The shape, thickness and material of the substrate 31 are such that a sufficiently linear response is obtained from the strain gauges and the device 30 has sufficient strength to function as intended. Examples of suitable substrate materials are glass fibre and Paxolyn.

In a preferred embodiment, further components may be mounted or printed on the device 30 such as a microprocessor controller 50, signal conditioning components (not shown), output controls or relays (not shown) and temperature compensation circuitry 80, vehicle connectors 52 and a motor connector 54 as well as general components such as resistors, capacitors, transistors, diodes and inductors, all of which may form a control circuit for the motor 20 when operated in conjunction with the strain gauges. By doing this, the control circuit for the window regulator becomes integrated with the whole sub-assembly, reducing the overall part count and hence reducing the cost of manufacture of the system still further.

In one class of embodiment, a standard motor 20 is used, and an interface is provided on the device between the control circuit and the motor, but in other embodiments, a specific interface may be provided on the motor 20 to allow a simple connection to the control circuit. To provide mechanical and environmental protection, the device 30 and any associated components are preferably encapsulated by a suitable resin material, or within a suitable enclosure (not shown).

Optionally, the PCB device 30 may also incorporate sensors 82 to determine the rotational position of the output shaft so as to provide feedback to the controller 50 about the position of the window 16.

Referring in particular to Figure 7, in use, a vehicle user with the vehicle ignition 84 switched on presses a window regulator switch 86 cause motor 20 to raise the window. If no obstruction is encountered, the window will fully close. An input from the positional sensors 82 preferably determines the position at which the anti-trap system may be overridden to enable the window to overcome the resistance of the seals at the top of the opening. In one class of embodiments, the positional sensors subsequently determine when the window is fully closed, thereby overriding the signal from the window regulator switch and preventing the motor 20 stalling. However, it is more common for the motor 20 to be allowed to stall as this provides the best seal. A protection circuit (not shown) is thus preferably provided to switch the motor off before overheating thereof occurs in this preferred embodiment.

If an obstruction is encountered during the raising of the window, this causes one or more of strain gauges (38a, 38b, 40a, 40b) to be more or less strained than would be the case were an obstruction not present. Under strain their electrical resistance changes and this change in resistance can be related to the amount of strain.

This change in resistance is proportional to the torque induced by the resistance to rotation of the motor 20. Once a predetermined current value is reached, the controller signals a cut-off of power being supplied to motor 20 thereby preventing injury or damage to the person or object causing the obstruction. Only once the obstruction is removed (and typically once the window is lowered by a predetermined amount such as 250mm) can the vehicle window 16 be raised again.

In a particularly preferred embodiment, the device is arranged such that it is possible to at least partially distinguish the forces applied to the closure by the motor 20 (and the resultant reaction force between the motor and panel) from acceleration forces applied to the closure 16 as a result of the accelerations of the closure system (e.g. caused by the vehicle driving over rough terrain).

Referring to Figures 5 and 6, it can be seen that first and second mounting apertures form part of a load reaction path between the motor 20 and the vehicle door panel 70, and that between them they constrain the motor 20 within the door.

The mounting apertures 24 and 26 are positioned at distance 2R from each other and the geometrical position of the centre-of-gravity CG of the motor/gearbox is also known.

Consideration of Figure 6 shows that resultant forces S1 and S2 act about mounting apertures 24 and 26.

An output torque T from the motor acts clockwise around the motor output shaft when the window is being closed and, with the vehicle 10 stationary, is a function of output force f.

The weight of the gearbox and window motor acts through the centre-of-gravity CG. With the vehicle 10 stationary the force M at CG is equivalent to the combined weight of the motor 20 and gearbox 22. However, with the vehicle moving over rough terrain the force M will vary. It should be noted that CG is located horizontally by distance x from mounting aperture 24 and vertically from mounting aperture by distance z.

Consideration of Figure 6 shows that the forces S1 and S2 can be resolved in the x and y directions and become Six, S1z, S2x and S2z. The output torque T of the motor can be considered to be a tangential force Ft acting at a radius r equivalent to the pitch circle diameter of a drum or pinion and, for convenience, this has been shown to be parallel to the z axis.

Note that the analysis below is more complicated where the sensors and output shaft are not in line, and/or the forces act at some other angle, but it may be demonstrated that the same principles apply.

Consideration of the above shows that several equations can be written, which express the situation at steady state i.e. with the vehicle 10 stationary and the window closing at a constant speed.

Given that we do not know the directions of S1 and S2 merely their magnitudes then, by pythagoras:-

$$S1x^2 + S1z^2 = S1^2 \text{ and } S2x^2 + S2z^2 = S2^2$$

Since we have conveniently defined Ft parallel to z axis and M acting vertically downwards, also parallel to the z axis then Ft x = 0 and Ft z = Ft.

Furthermore Fmx = 0 and Fmz = M.

Resolving in x and z we have the summations:

$$x=0, z=0$$

thus

$$S1x+s2x=0, \quad S1z + S2z = Ft-M$$

And taking moments about S1

$$S2z.2R+FT.(R+r) = M.x$$

Collecting Terms

$$S2z=Ft.(R+r)/2.R-M.x/2.R$$

of which R, r & x are all known and constant for a given application.

$$S2z=Ft.k1-M.k2$$

Where the constants k1=(R+r)/2.R&k2=x/2.R; Thus

$$S1z=Ft-M-S2z$$

$$S1z=Ft-M-Ft.(R+r)/2.R-M.x/2.R$$

Collecting Terms

$$S1x=Ft-Ft.(R+r)/2.R-M-M.x/2.r$$

$$S1z=Ft(1.(R+r)/2.R)-M(M1-x/2.R)$$

But k1=(R+r)/2.r & K2 = x/2.R, so

$$S1z=Ft(1-k1) - M(1-k2)$$

following which

Thus

$$S2 = Ft.k1-M.k2$$

and

$$S1 = Ft(1-k1) - M(1-k2)$$

S1 and S2 from the output from the mounting apertures 24 and 26, k1 and k2 being constant, we now have two equations and two unknowns (Ft and M) and therefore can solve for Ft and M.

This solution allows comparison of the motor/gearbox effective weight M and the known pre-measured value of the motor/gearbox weight. This comparison gives an instantaneous value for the vertical g-forces applied to the window motor and therefore the adjacent window glass and permits greater discrimination of the system loads resulting from the vehicle movement from those associated with a trapped object or body part.

Thus the above system, by comparing the output S1 and S2 from the mounting apertures 24 and 26, the proportion of the measured output due to vertical acceleration and that due to an object trapped may be distinguished arithmetically and thus a better definition of actual trap force (as opposed to apparent trap force) may be obtained. As such it is possible to largely eliminate interference with the true trap force signal caused by vibration and/or accelerations with a large vertical component. The present invention achieves this in a particular cost effective manner as a minimum of components are required since the strain gauges 38a, 38b, 40a and 40b are provided integrally on the PCB device 30, and also measure the parameters which can be used to determine true trap force from apparent trap force.

As a result of improved sensitivity of the system to objects being trapped, lower force thresholds may be specified and therefore more rapid reaction may be obtained both of which leads to a reduction in the overall trap force experienced by the person or object.

The system also reduces the likelihood of false trap signals and hence false reopening of the window, thus reducing the possibility of distraction and annoyance to occupants of the vehicle.

Once the window is virtually closed such that any gap between the window glass and window aperture is sufficiently small to not allow entry of a small body part such as a finger, then the anti-squeeze requirement is no longer necessary. Thus when the window glass reaches such a position this position can be indicated by a proximity sensor, micro switch, shaft positional sensors 82 or the like which would indicate to the controller 50 of the window that anti-squeeze is no longer required for the final closing of the window.

It is envisaged that the present invention could be used in a variety of applications, such as automotive windows and other partitions moving in a primarily vertical direction. However, the principles outlined above would be applicable to other types of closure where the motor may be so mounted as to be subject to the disturbing forcese in the same manner as the closure being operated by that motor. Further applications include vehicular sun roofs, transverse and longitudinal sliding doors as typically used for corridor and compartment closures in trains and aircraft, and other types of sliding partition on ships and other marine vehicles.

**Claims**

1. A device (30) for determining a load applied to an object (18), the device comprising a printed circuit board and a gauge capable (38a) of providing an output from which the load may be derived or inferred, the gauge being formed integrally as part of the printed circuit.

2. A device according to claim 1 wherein a further gauge (38b) is formed integrally as part of the printed circuit.

3. A device according to claim 1 or claim 2 wherein the device is so constructed and arranged as to be capable of mounting the object to a fixed body (70).

4. A device according to claim 3 wherein the gauge is provided intermediate mounting points (24, 26, 32, 34, 36) for mounting the object and for mounting the device to the fixed body.

5. A device according to claim 4 wherein the gauge is mounted proximate one of the mounting points.

6. A device according to any one of claims 2 to 5 wherein the gauge is capable of providing an output in response to a loading on a first axis and the further gauge is provided at an angle to the first gauge so as to provide an output in response to loads about a second axis perpendicular the first.

7. A device according to claims 4 to 6 wherein intermediate the mounting points, the device comprises a portion so constructed and arranged as to provide a relatively linear response to load applied thereto.

8. A device according to claim 7 wherein the portion intermediate the mounting points is elongate.

9. A device according to claim 8 wherein the device is provided with a substantially central hole arranged to cause the portion intermediate the mounting points to be elongate.

10. A device according to claims 4 to 8 wherein the strain gauges are mounted proximate the periphery of the device.

11. A device according to any preceding claim wherein the device further comprises additional component(s).

**12.** A device according to any preceding claim wherein the device is capable of providing a control function.

**13.** A device according to claim 12 wherein a controller (50) mounted on the device is capable of providing the control function.

**14.** A device according to claim 12 or claim 13 when dependent upon claim 3 wherein the device is capable of controlling the function of the object.

**15.** A device according to any preceding claim wherein the device is capable of providing a temperature compensation function.

**16.** A device according to any preceding claim wherein the load is torque.

**17.** A device according to any one of claims 3 to 16 wherein said object is a power window regulator (18).

**18.** A device according to any preceding claim wherein the gauge is a strain gauge.

**19.** A device according to any preceding claim wherein a plurality of gauges are provided and are so arranged as to enable the load to be at least partially distinguished from extraneous forces to which the device may be subjected, in use.

**20.** A closure system incorporating a device according to any preceding claim.

**21.** A closure system according to claim 20 further comprising a motor component mounted on a fixed body by the device.

**22.** A closure system including a closure (16) moveable for substantially closing an aperture (14) in use, and an actuator (18) capable of at least closing the closure, the actuator being mounted by mounting means (30), the mounting means including one or more gauges (38a, 38b, 40a, 40b) capable of measuring, in use, parameters of the closure system, in use the closure system being subjected to accelerations and being arranged such that it is possible to at least partially distinguish forces applied to the closure by the actuator from acceleration forces applied to the closure as a result of the accelerations of the closure system by consideration of the measured parameters.

FIG.1A

FIG.2

FIGURE 1B

FIG. 4

FIG. 3

FIG 5

FIG. 6

FIG.7